# EUROPÄISCHE PATENTSCHRIFT

(11) **EP 2 024 280 B1**
(45) Veröffentlichungstag und Bekanntmachung des Hinweises auf die Patenterteilung: **26.06.2019**
(21) Anmeldenummer: 07725069.4
(22) Anmeldetag: 10.05.2007
(51) Int. Cl.: C01B 7/04, C25B 1/26

(54) **VERFAHREN ZUR HERSTELLUNG VON CHLOR AUS CHLORWASSERSTOFF UND SAUERSTOFF**
METHOD FOR PRODUCING CHLORINE FROM HYDROGEN CHLORIDE AND OXYGEN
PROCÉDÉ DE PRODUCTION DE CHLORE À PARTIR DE GAZ CHLORHYDRIQUE ET D'OXYGÈNE

(30) Priorität: 18.05.2006 DE 102006023261
(43) Veröffentlichungstag der Anmeldung: 18.02.2009
(73) Patentinhaber: Covestro Deutschland AG, 51373 Leverkusen (DE)
(72) Erfinder: WEBER, Rainer, 51519 Odenthal (DE); KINTRUP, Jürgen, 48282 Emsdetten (DE); BULAN, Andreas, 40764 Langenfeld (DE); KÄMPER, Friedhelm, 47807 Krefeld (DE)
(74) Vertreter: Levpat
(86) Internationale Anmeldenummer: PCT/EP2007/004147
(87) Internationale Veröffentlichungsnummer: WO 2007/134726

(56) Entgegenhaltungen:
- WO-A-00/73538
- DE-A1- 10 235 476
- DE-A1- 19 535 716
- DE-C1- 4 417 744
- JP-A- 59 073 405
- PETER SCHMITTINGER: "Chlorine" 2000, WILEY-VCH VERLAG , XP008062016 in der Anmeldung erwähnt Seite 77 - Seite 83
- DATABASE EPODOC EUROPEAN PATENT OFFICE, THE HAGUE, NL; XP002482240 -& RU 2 253 607 C1 ((KSME-R) KSM ENG STOCK CO) 10. Juni 2005 (2005-06-10) in der Anmeldung erwähnt
- DATABASE WPI Week 199420 Derwent Publications Ltd., London, GB; AN 1994-165727 XP002482225 & SU 1 801 943 A1 (VOLG POLY) 15. März 1993 (1993-03-15) -& SU 1 801 943 A1 (VOLGOGRADSKY POLITEKH INST [SU]) 15. März 1993 (1993-03-15) in der Anmeldung erwähnt

## Beschreibung

Die Erfindung geht aus von bekannten Verfahren zur Herstellung von Chlor durch thermische Umsetzung von Chlorwasserstoff mit Sauerstoff unter Einsatz von Katalysatoren, bei dem das bei der Umsetzung entstehende Gasgemisch, bestehend wenigstens aus den Zielprodukten Chlor und Wasser, nicht umgesetztem Chlorwasserstoff und Sauerstoff sowie weiteren Nebenbestandteilen wie Kohlendioxid und Stickstoff, zur Kondensation von Salzsäure abgekühlt wird, die entstandene flüssige Salzsäure vom Gasgemisch abgetrennt wird, die im Gasgemisch verbliebenen Reste an Wasser, insbesondere durch Wäsche mit konzentrierter Schwefelsäure entfernt werden. Die Erfindung betrifft speziell die Kombination mit elektrochemischen HCl-Oxidationsverfahren.

Bei der Herstellung von einer Vielzahl von chemischen Umsetzungen mit Chlor und oder Phosgen, beispielsweise der Herstellung von Isocyanaten oder der Chlorierung von Aromaten, fällt als Nebenprodukt Chlorwasserstoff an. Dieser Chlorwasserstoff kann durch Elektrolyse oder durch Oxidation mit Sauerstoff wieder in Chlor überführt werden, das erneut bei den chemischen Umsetzungen eingesetzt wird. Die Oxidation von Chlorwasserstoff (HCl) zu Chlor (Cl₂) erfolgt durch Umsetzung von Chlorwasserstoff und Sauerstoff (O₂) gemäß

4 HCl + O₂ → 2 Cl₂ + 2 H₂O

Die Reaktion kann in Gegenwart von Katalysatoren bei einer Temperatur von ca. 250 bis 450°C durchgeführt werden. Der übliche Reaktionsdruck liegt im Bereich von 1 bis 10 bar. Es sind verschiedene Ausführungsformen des Verfahrens, das allgemein als Deacon-Verfahren bekannt ist, beschrieben: Shell-Chlor-Verfahren, MT-Chlor-Verfahren, KEL-Chlor-Verfahren, Carrier Catalyst Process und Sumitomo-Chlor-Verfahren.

Geeignete Katalysatoren für das Deacon-Verfahren enthalten Übergangsmetallverbindungen wie Kupfer- und Rutheniumverbindungen oder auch Verbindungen anderer Edelmetalle wie Gold und Palladium. Solche Katalysatoren sind beispielsweise in den Schriften DE 1 567 788 A1, EP 251 731 A2, EP 936 184 A2, EP 761 593 A1, EP 711 599 A1 und DE 102 50 131 A1 beschrieben. Die Katalysatoren sind in der Regel auf einem Träger aufgebracht. Diese Träger bestehen beispielsweise aus Siliciumdioxid, Aluminiumoxid, Titandioxid oder Zirkonoxid. Die Deacon-Verfahren werden in der Regel in Wirbelbettreaktoren oder Festbettreaktoren, z.B. in Rohrbündelreaktoren, durchgeführt. Chlorwasserstoff wird vor der Reaktion von Verunreinigungen befreit um eine Vergiftung der eingesetzten Katalysatoren zu vermeiden.

Alternativ dazu sind Verfahren bekannt, bei denen die Reaktion von Chlorwasserstoff mit Sauerstoff nichtthermisch aktiviert wird. Solche Verfahren sind in "W. Stiller, Nichtthermische aktivierte Chemie, Birkhäuser Verlag, Basel, Boston, 1987, S. 33-34, S. 45-49, S122-124, S. 138-145", beschrieben. Spezielle Ausführungsformen sind beispielsweise in den Schriften RU 2253607, JP-A-59073405, DD-A-88 309, SU 1801943 A1 offenbart. Unter nichtthermisch aktivierten Reaktionen versteht man beispielsweise Anregungen der Reaktion mit folgenden Mitteln oder Verfahren:
- energiereiche Strahlung, z.B. Laserstrahlung, photochemische Strahlungsquellen, UV-Strahlung, Infrarotstrahlung u. a.
- einen Niedertemperaturplasma, z.B. durch elektrische Entladung erzeugt
- Magnetfeldanregung
- Tribomechanische Aktivierung, z.B. Anregung durch Stoßwellen
- ionisierende Strahlung, z.B. Gamma- und Röntgenstrahlung, α- und β-Strahlen aus Kernzerfällen, hochenergetische Elektronen, Protonen, Neutronen und schwere Ionen
- Mikrowellenbestrahlung

Sauerstoff wird sowohl bei der thermischen als auch bei der nichtthermischen aktivierten Umsetzung von Chlorwasserstoff mit Sauerstoff in der Regel als reines Gas mit einem O₂-Gehalt von > 98 Vol- %, eingesetzt.

Allen bekannten Verfahren ist gemeinsam, dass bei der Reaktion von Chlorwasserstoff mit Sauerstoff ein Gasgemisch erhalten wird, das neben dem Zielprodukt Chlor auch Wasser, nicht umgesetzten Chlorwasserstoff und Sauerstoff sowie weitere Nebenbestandteile wie Kohlendioxid enthält. Zur Gewinnung von reinem Chlor wird das Produktgasgemisch nach der Reaktion soweit abgekühlt, dass Reaktionswasser und Chlorwasserstoff in Form von konzentrierter Salzsäure auskondensieren. Die entstehende Salzsäure wird abgetrennt und das verbleibende gasförmige Reaktionsgemisch wird durch Wäsche mit Schwefelsäure oder anderen Methoden wie Trocknung mit Zeolithen von restlichem Wasser befreit.

Die abgetrennte Salzsäure wird vorzugsweise einer Desorptionsstufe zugeführt, in der gasförmiger Chlorwasserstoff wieder freigesetzt wird. Dieser gasförmige Chlorwasserstoff kann teilweise oder vorzugsweise vollständig in die Umsetzung von Chlorwasserstoff mit Sauerstoff zurückgeführt werden. Die in der Desorptionsstufe anfallende verdünnte Salzsäure kann in die Salzsäure-Kondensationsstufe zurückgeführt werden. Hier dient die verdünnte Salzsäure als Absorptionsmittel für den abzutrennenden gasförmigen Chlorwasserstoff. Ein derartiges Vorgehen ist beispielsweise in der Schrift DE 102 35 476 A1 beschrieben. Alternativ dazu kann die abgetrennte Salzsäure auch einer anderen Verwertung zugeführt werden.

Das von restlichem Wasser befreite chlorhaltige Reaktionsgasgemisch wird anschließend verdichtet, wobei Sauerstoff und andere Gasbestandteile in der Gasphase bleiben und vom verflüssigten Chlor abgetrennt werden können. Derartige Verfahren zur Gewinnung von reinem Chlor aus Gasgemischen sind beispielsweise in den Offenlegungsschriften DE 195 35 716 A1 und DE 102 35 476 A1 beschrieben. Das nunmehr gereinigte Chlor wird dann der Verwendung, beispielsweise bei der Herstellung von Isocyanaten, zugeführt.

Ein wesentlicher Nachteil dieser Verfahren ist der vergleichsweise hohe Energieaufwand für die Desorption von Chlorwasserstoff aus der bei der Reinigung des Chlorgasstroms nach der Reaktion anfallenden Salzsäure. Eine anderweitige Verwertung der anfallenden Salzsäure in anderen Prozessen ist dazu aber in der Regel nicht wirtschaftlich.

Es wurde nun gefunden, dass die Nachteile überwunden werden können, wenn die bei der Reinigung des Chlorgasstroms nach der Reaktion anfallende Salzsäure einer elektrochemischen Oxidation zugeführt wird, in der wenigstens ein Teil der Salzsäure zu Chlor oxidiert wird. Gegenstand der Erfindung ist ein Verfahren zur Herstellung von Chlor mittels mehrstufiger Oxidation durch
a) thermische Umsetzung von Chlorwasserstoff mit Sauerstoff unter Einsatz von Katalysatoren, bei dem das bei der Umsetzung a) entstehende Gasgemisch, bestehend aus den Zielprodukten Chlor und Wasser, nicht umgesetztem Chlorwasserstoff und Sauerstoff, sowie weiteren Nebenbestandteilen, insbesondere Kohlendioxid und Stickstoff,
b) zur Kondensation von Salzsäure abgekühlt wird und
c) die entstandene wässrige Lösung von Chlorwasserstoff (Salzsäure) vom Gasgemisch abgetrennt wird, dadurch gekennzeichnet, dass
d) die abgetrennte Salzsäure mindestens teilweise einer elektrochemischen Oxidation zugeführt wird, in der wenigstens ein Teil der wässrigen Salzsäure zu Chlor oxidiert wird, wobei als Kathode eine Sauerstoff reduzierende Gasdiffusionselektrode verwendet wird, welcher Sauerstoff zugeführt wird,
e) das in Schritt d) anfallende Chlorgas dem in Schritt c) anfallenden Gasgemisch zugegeben wird,
f) die im Gasgemisch aus den Schritten c) und e) vorhandenen Reste an Wasser, insbesondere durch Wäsche mit Schwefelsäure, entfernt werden,
g) das entstehende chlorreiche Gasgemisch von Sauerstoff und ggf. von Nebenbestandteilen befreit wird.

Das Verfahren wird vorzugsweise kontinuierlich durchgeführt, da ein gleichfalls möglicher Batch- oder Semibatchbetrieb etwas technisch aufwändiger ist als das kontinuierliche Verfahren.

In einer bevorzugten Ausführung wird Chlorwasserstoff als Salzsäure gemäß den Schritten b) und c) vollständig vom Gasgemisch abgetrennt. Besonders bevorzugt erfolgt die Abtrennung des Chlorwasserstoffs vom Gasgemisch gemäß Schritt b) und c) durch zusätzliche Wäsche des Gasgemisches mit Wasser oder verdünnter Salzsäure, insbesondere mit Wasser.

Die elektrochemische Oxidation der Salzsäure gemäß Schritt d) kann nach dem Membranverfahren oder nach dem Diaphragmaverfahren, insbesondere in einer Zweiraum-Elektrolysezelle, bestehend aus Anodenraum und Kathodenraum, oder insbesondere in einer Dreiraum-Elektrolysezelle, bestehend aus Anodenraum, Kathodenraum und einem Elektrolytraum zwischen Anoden- und Kathodenraum, durchgeführt werden. Bevorzugt wird eine Zweiraum-Elektrolysezelle gewählt.

Beim Membranverfahren ist der Anodenraum von dem Kathodenraum durch eine Ionenaustauschermembran (nachfolgend vereinfacht auch als Membran bezeichnet), insbesondere eine Kationenaustauschermembran, getrennt, beim Diaphragmaverfahren wird Kathoden- und Anodenraum durch ein Diaphragma getrennt. Der Abstand der Elektroden (Anode und Kathode) von dem Diaphragma bzw. der Membran beträgt vorzugsweise 0 bis 3 mm, besonders bevorzugt 0 bis 2 mm. Geeignete Ionenaustauschermembranen sind kommerziell erhältlich, z.B. einschichtige Ionenaustauschermembranen mit Sulfonsäuregruppen. Beispielsweise kann eine Membran vom Typ Nafion® 324 oder Nafion® 117 der Fa. DuPont eingesetzt werden.

Als Diaphragma kann z.B. ein gewebtes Diaphragma gemäß DE 3 321 159 A1 eingesetzt werden. Für das Gewebe können Fäden aus Kunststoff verwendet werden. So können beispielsweise Gewebe aus Polyvinylchlorid (PVC) oder Polyvinylidenfluorid (PVDF) oder auch aus Mischgeweben mit Fäden aus PVC und PVDF eingesetzt werden. Kett- oder Schussfäden können dabei neben monofilen aus multifilen Fäden, wie in DE 3 321 159 A beschrieben, bestehen. Nach dem Weben des Diaphragmas kann das Gewebe zwecks Optimierung der Gasdurchlässigkeit, z.B. durch Kalandrieren, verdichtet werden.

Bei der Elektrolyse von Salzsäure nach dem Diaphragmaverfahren oder dem Membranverfahren können Elektroden eingesetzt werden, die auf Graphit basieren, wobei die Anode und/oder die Kathode bevorzugt im Wesentlichen aus Graphit bestehen. Besonders bevorzugt werden bipolare Elektroden aus Graphit eingesetzt. Eine besonders vorteilhafte Ausfuhrung der Kathoden besteht darin, dass insbesondere die Kathoden aber auch die Anoden aus Graphit mit einer edelmetallhaltigen Beschichtung, zum Beispiel Iridium, versehen sind z.B. gemäß DE 4417744 A1.

Die Graphit-Anoden weisen insbesondere eine geometrische Form auf, wie sie z.B. aus DE 3 041 897 A bekannt ist. Die Kathoden weisen vorzugsweise eine ähnliche Struktur wie die Anoden auf. Die Form der Anode und/oder Kathode weist bevorzugt vertikal angeordnete Nuten, Rillen, Kerben, Vertiefungen oder dgl. auf. Diese Nuten dienen im Wesentlichen dazu, das sich bei der Elektrolyse bildende Gas, d.h. Chlor und Wasserstoff, aus dem engen Spalt zwischen der jeweiligen Elektrode und dem Diaphragma bzw. der Membran nach oben abzuleiten. Besonders bevorzugt haben die Nuten eine Tiefe von 5 bis 35 mm, ganz besonders bevorzugt von 15 bis 25 mm und eine Breite von bevorzugt 1 bis 5 mm. Zwischen zwei benachbarten, im Wesentlichen parallel zueinander angeordneten Nuten beträgt der Abstand bevorzugt 4 bis 6 mm. In einer weiteren möglichen Ausführungsform der Nuten variieren die Tiefe und/oder die Breite der Nuten entlang ihrer Länge. So kann die Tiefe der Nuten von 12 bis 15 mm am unteren Ende der Nuten und 20 bis 30 mm am oberen Ende der Nuten betragen.

Die Salzsäure wird in einem bevorzugten Diaphragmaverfahren als Elektrolyt sowohl im Anodenraum als auch im Kathodenraum eingesetzt. Bei der Elektrolyse wird an der Anode Chlor, an der Kathode Wasserstoff erzeugt.

Eine bevorzugte Betriebsweise der elektrochemischen Oxidation von Salzsäure bei der kathodisch Wasserstoff entwickelt wird, besteht darin, dass der Salzsäure, welche als Elektrolyt im Kathodenraum dient, Metallionen aus der Gruppe der Platinmetalle, vorzugsweise Platin und/oder Palladium, zugesetzt werden. So können beispielsweise Lösungen der Hexachloroplatinat (IV)-Säure (H₂PtCl₆) oder Lösungen des Dinatriumtetrachloropalladas (II) (Na₂PdCl₄) oder auch deren Mischungen zugegeben werden. Die Zugabe kann kontinuierlich oder diskontinuierlich erfolgen. Die Zugabe von Metallionen zur Salzsäure im Kathodenraum dient der Aufrechterhaltung einer niedrigen Elektrolysespannung im Bereich von 1,6 bis 2,1 V, verglichen mit 2,2 bis 2,3 V ohne Zusatz von Metallionen, z.B. bei 5 kA/m² und 70 bis 80°C und eine bevorzugt 15 bis 25 %, besonders bevorzugt ca. 20 %ige, Salzsäure. Demnach wird eine Menge an Metallionen zugegeben, die ausreicht, um die Elektrolysespannung im Bereich von 1,8 bis 2,1 zu halten. Dies bedeutet, dass bei steigender Elektrolysespannung während des Betriebes die Zugabe an Metallionen erhöht wird.

Die Elektrolyse gemäß Schritt d) wird bevorzugt bei einer Temperatur von 50 bis 90°C durchgeführt. Die Konzentration der in der Elektrolyse einzusetzenden wässrigen Lösung von Chlorwasserstoff beträgt generell vorzugsweise 10 bis 25 Gew. %. Bei den Diaphragmaverfahren wird besonders bevorzugt Salzsäure einer Konzentration von 12 bis 20 Gew.- % verwendet. Die Elektrolyse mit Diaphragma kann bei einem Absolutdruck von ca. 1 bar unter Berücksichtigung eines gegebenenfalls noch einzustellenden Differenzdrucks zwischen Anoden- und Kathodenkammer oder auch bei höherem Druck von bis zu 2 bar durchgeführt werden. Noch höhere Drücke sind generell möglich, erfordern jedoch einen entsprechend höheren Aufwand bei der Konstruktion der Elektrolysezelle. Der Differenzdruck zwischen Anodenkammer und Kathodenkammer beträgt bevorzugt 0 bis 10 mbar, besonders bevorzugt 1 bis 2 mbar, so dass aufgrund des höheren Drucks auf der Anodenseite Spuren des gebildeten Chlorgases über das Diaphragma auf die Kathodenseite gelangt und somit sich mit dem kathodisch gebildeten Wasserstoff vermischen kann.

In einer alternativen Ausführungsform erfolgt die elektrochemische Oxidation der wässrigen Lösung von Chlorwasserstoff gemäß Schritt d) nach dem Membranverfahren mit einer Gasdiffusionselektrode als Kathode. Dabei kann die Elektrolysezelle sowohl aus zwei Kammern als auch aus drei Kammern, bevorzugt jedoch aus zwei Kammern, bestehen. Der Kathodenhalbzelle wird ein sauerstoffhaltiges Gas, z.B. Sauerstoff, Luft oder mit Sauerstoff angereicherte Luft, zugeführt. Der Sauerstoff wird an der Gasdiffusionselektrode reduziert, wobei Wasser gebildet wird. Der Anodenhalbzelle wird die wässrige Chlorwasserstoff-Lösung zugeführt, wobei der Chlorwasserstoff an der Anode zu Chlor oxidiert wird. Die Anodenhalbzelle und die Kathodenhalbzelle sind durch eine Kationenaustauschermembran voneinander getrennt. Die Elektrolyse von Salzsäure unter Verwendung einer Gasdiffusionselektrode als Kathode ist z.B. in WO 00/73538 A1 beschrieben, z.B. ein chlorbeständiger Kunststoff. Besonders bevorzugt basiert die Gasdiffusionselektrode wenigstens auf einem elektrisch leitfähigen Gewebe, Geflecht, Gewirke, Netz oder Vlies aus Kohlenstoff, welches zwischen einer kohlenstoffhaltigen Katalysatorschicht und einer Gasdiffusionsschicht angeordnet ist.

Die Elektrolysezelle kann insbesondere entweder aus einem nichtmetallischen Werkstoff gemäß DE 103 47 703 A1 oder aus einem metallischen Werkstoff bestehen. Als metallischer Werkstoff für die Elektrolysezelle eignet sich z.B. besonders Titan oder eine Titan-Legierung, wie eine Titan-Palladium-Legierung. Dabei sind die Halbschalen für die Anode- und Kathodenhalbzelle, der Stromverteiler und die Stromzuführungen aus Titan oder einer Titan-Legierung gefertigt.

Die Anode kann bevorzugt gemäß DE 102 34 806 A1 mit einer besonderen gasabführenden Konstruktion ausgeführt sein. Dabei besteht die Anode aus Metall, vorzugsweise aus Titan mit einer Beschichtung aus Edelmetalloxid, z.B. aus Rutheniumoxid. Weiterhin kann die Anode besonders bevorzugt aus Titan gemäß der Schrift DE 102 00 072 A1 eine Zwischenschicht aus Titancarbid oder Titanborid aufweisen, welche mittels Plasma- oder Flammspritzen auf die Titananode aufgebracht wird, bevor die Beschichtung aus einem Edelmetalloxid aufgebracht wird. Gemäß der Schrift DE 102 34 806 A1 weist die Metallanode in einer weiteren bevorzugten Ausführung Öffnungen für den Durchlass des während der Elektrolyse gebildeten Gases auf, wobei die Öffnungen bevorzugt Leitstrukturen aufweisen, welche das gebildete Gas auf die der Ionenaustauschermembran abgewandten Seite der Metallanode ableiten. Dabei sollte die Gesamtquerschnittsfläche der Öffnungen im Bereich von 20 % bis 70 % der Fläche betragen, welche durch die Höhe und Breite der Anode gebildet wird. Die Metallanode kann außerdem einen wellenförmigen, zickzackförmigen oder rechteckförmigen Querschnitt aufweisen. Die Tiefe der Anode sollte dabei mindestens 1 mm betragen. Das Verhältnis von elektrochemisch aktiver Fläche der Metallanode zu der Fläche, welche durch die Höhe und Breite der Metallelektrode gebildet wird, sollte mindestens 1,2 betragen. In einer speziellen Ausführungsform kann die Metallanode aus zwei aneinander liegenden Streckmetallen bestehen, wobei das zur Ionenaustauschermembran weisende Streckmetall feiner strukturiert ist als das von der Ionenaustauschermembran abweisende Streckmetall. Dabei ist ferner das feiner strukturierte Streckmetall flach gewalzt und das gröber strukturierte Streckmetall so angeordnet, dass die Maschenstege in Richtung der Kathode geneigt sind und als Leitstrukturen dienen. Alternativ kann die Anode auch aus einem Streckmetall bestehen. Grundsätzlich sollte die Anode eine freie Fläche von 15 bis 70 % aufweisen. Die Dicke der Streckmetalle ist so zu wählen, dass kein zusätzlicher elektrischer Widerstand bei einer bipolaren Verschaltung der einzelnen Elektrolysezellen (Zellelemente) zu einem Elektrolyseur auftritt. Der elektrische Widerstand hängt im Wesentlichen von der elektrischen Kontaktierung der Anode ab, wie zum Beispiel Anzahl der stromzuführenden Verbindungselemente zwischen Anode und Rückwand der Anodenhalbzelle.

Bei der Elektrolyse mittels Gasdiffusionselektrode können der Anodenraum und der Kathodenraum von einer handelsüblichen Ionenaustauschermembran getrennt sein. Beispielsweise können Ionenaustauschermembranen der Fa. DuPont vom Typ Nafion® 324 oder Nafion® 117 eingesetzt werden. Bevorzugt wird eine Membran eingesetzt, welche, wie in WO 05/12596 A1 beschrieben, auf der zur Gasdiffusionselektrode gewandten Seite eine glatte Oberflächenstruktur aufweist. Die glatte Oberflächenstruktur der Membran erlaubt es, dass die Gasdiffusionselektrode und die Membran derart aneinander anliegen, dass unter einem Druck von 250 g/cm² und bei einer Temperatur von 60°C die Kontaktfläche wenigstens 50 % der geometrischen Fläche der Membran beträgt.

Der kathodische Stromverteiler, auf den die Gasdiffusionselektrode aufgebracht wird, ist bevorzugt gemäß DE 102 03 689 A1 ausgeführt. Dieser weist eine freie Fläche von weniger als 65 %, jedoch von mehr als 5 % auf. Die Dicke des Stromverteilers beträgt mindestens 0,3 mm. Er kann aus einem Streckmetall, Netz, Gewebe, Schaum, Vlies, Schlitzblech oder Lochplatte aus Metall bestehen. Vorzugsweise besteht der kathodische Stromverteiler aus einem Streckmetall mit einer Maschenlänge von 4 bis 8 mm, einer Maschenbreite 3 bis 5 mm, einer Stegbreite von 0,4 bis 1,8 mm und einer Dicke von 0,4 bis 2 mm. Zusätzlich kann der kathodische Stromverteiler ein zweites Streckmetall als Träger für das erste Streckmetall aufweisen. Das zweite Streckmetall als Träger hat bevorzugt eine Maschenlänge von 10 bis 40 mm, eine Maschenbreite von 5 bis 15 mm, eine Stegbreite von 2 bis 5 mm sowie eine Dicke von 0,8 bis 4 mm. Als Träger kann auch ein Netz eingesetzt werden, welches vorzugsweise eine Drahtdicke von 1 bis 4 mm und eine Maschenweite von 7 bis 25 mm besitzt. Weiterhin kann als Träger ein Lochblech oder Schlitzblech eingesetzt werden, welches bevorzugt eine offene Fläche von weniger als 60 % und eine Dicke von 1 bis 4 mm besitzt. Als Werkstoff für den kathodischen Stromverteiler kann z.B. Titan oder eine edelmetallhaltige Titanlegierung, wie z.B. Titan-Palladium eingesetzt werden. Ist der Stromverteiler ein Streckmetall, so ist dieses bevorzugt gewalzt.

Als Gasdiffusionselektrode kann eine handelsübliche Gasdiffusionselektrode eingesetzt werden, die mit einem geeigneten Katalysator ausgerüstet ist. Geeignete Katalysatoren enthalten vorzugsweise gemäß WO 00/73538 A1 Rhodium und/oder wenigstens ein Rhodiumsulfid oder eine Mischung aus Rhodium und wenigstens einem Rhodiumsulfid. Gemäß EP 931 857 A1 können außerdem Rhodium und/oder Rhodiumoxid oder deren Mischungen eingesetzt werden. Die Gasdiffusionselektrode besteht bevorzugt aus einem elektrisch leitfähigen Gewebe, Papier oder Vlies aus Kohlenstoff, wobei das Gewebe, Papier oder Vlies auf einer Seite mit einer kohlenstoffhaltigen Katalysatorschicht und auf der anderen Seite mit einer Gasdiffusionsschicht versehen ist. Der Katalysator wird bevorzugt auf einen Träger, vorzugsweise aus Kohlenstoff, aufgebracht, wobei Polytetrafluorethylen-Teilchen integriert sind, die an die Trägerstruktur gekoppelt sind. Die Gasdiffusionsschicht besteht vorzugsweise aus Kohlenstoff und Polytetrafluorethylen-Teilchen, bei der beispielsweise das Verhältnis von Kohlenstoff zu PTFE 50:50 beträgt. Die Gasdiffusionselektrode kann beispielsweise so angeordnet werden, dass sie nicht fest mit der Ionenaustauschermembran verbunden ist. Die Kontaktierung der Gasdiffusionselektrode mit dem Stromverteiler und der Ionenaustauschermembran erfolgt bevorzugt durch Presskontakt, d.h. die Gasdiffusionselektrode, der Stromverteiler und die Membran werden aneinander gepresst. Die Gasdiffusionselektrode kann mit dem Stromkollektor gemäß DE 101 48 600 A1 verbunden sein.

Die Elektrolyse von Salzsäure nach dem Membranverfahren mit Gasdiffusionselektrode wird bevorzugt bei einer Temperatur von 40 bis 70°C durchgeführt. Die Konzentration der wässrigen Lösung von Chlorwasserstoff im Anodenraum beträgt insbesondere 10 bis 20 Gew.- %, besonders bevorzugt 12 bis 17 Gew.- %. Die Zelle kann beispielsweise so betrieben werden, dass der Druck im Anodenraum höher ist als der Druck im Kathodenraum. Dadurch wird die Kationenaustauschermembran auf die Gasdiffusionselektrode und diese wiederum auf einen Stromverteiler gedrückt. Alternativ kann eine Konstruktion der Elektrolysezelle gewählt werden, die in der DE 101 38 214 A1 beschrieben wird. Die Anode und/oder der Stromverteiler sind elastisch gelagert, beispielsweise indem sie mittels Federn mit der Rückwand der jeweiligen "Halbzelle" verbunden sind. Beim Zusammenbau der Zelle entsteht eine sogenannte zero gap Anordnung, bei der die Anode in direktem Kontakt mit der Ionenaustauschermembran, diese wiederum in direktem Kontakt mit der Gasdiffusionselektrode und diese wiederum in direktem Kontakt mit dem Stromverteiler steht. Die elastische Lagerung bewirkt das Aneinanderpressen von Anode, Membran, Gasdiffusionselektrode und Stromverteiler.

In einer besonders bevorzugten Ausführungsform des Elektrolyseverfahrens wird beim Anfahren der Elektrolysezelle gemäß DE 10 152 275 A1 das Anodenhalbelement wird mit einer 5 bis 20 gew. %igen Salzsäure gefüllt, wobei die Salzsäure mindestens 10 ppm freies Chlor enthält und die Konzentration der Salzsäure während der Inbetriebnahme mehr als 5 Gew. % beträgt. Der Volumenstrom der Salzsäure durch den Anodenraum wird so eingestellt, dass zu Beginn der Elektrolyse die Salzsäure mit einer Geschwindigkeit im Anodenraum von 0,05 bis 0,15 cm/s strömt. Die Elektrolyse wird mit einer Stromdichte von 0,5 bis 2 kA/m² gestartet und in Zeitintervallen von 5 bis 25 Minuten um jeweils 0,5 bis 1,5 kA/m² erhöht. Nachdem eine vorgegebene Stromdichte von vorzugsweise 4 bis 7 kA/m² erreicht ist, wird der Volumenstrom der Salzsäure so eingestellt, dass die Salzsäure im Anodenhalbelement mit einer Geschwindigkeit von 0,2 bis 0,4 cm/s strömt.

Eine besonders vorteilhafte Betriebsweise der Elektrolysezelle kann gemäß DE 101 38 215 A1 erfolgen, wonach die Elektrolysezelle zur Erniedrigung der Zellspannung mit einem erhöhten Druck in der Kathodenkammer betrieben wird. Der Differenzdruck zwischen Anodenraum und Kathodenraum sollte 0,01 bis 1000 mbar und der Sauerstoffdruck im Kathodenraum mindestens 1,05 bar absolut betragen.

In einer weiteren bevorzugten Variante des neuen Verfahrens wird die Salzsäure in Schritt d) zusammen mit Alkalichloriden, insbesondere mit Natriumchlorid in einer anodischen Alkalichlorid-Elektrolyse oxidiert.

Das Verfahren der Natriumchlorid-Elektrolyse wird im Folgenden näher beschrieben.

Üblicherweise werden zur Elektrolyse von Natriumchlorid-haltigen Lösungen Membranelektrolyseverfahren eingesetzt (siehe hierzu Peter Schmittinger, CHLORINE, Wiley-VCH Verlag, 2000, Seite 77 ff.). Hierbei wird eine zweigeteilte Elektrolysezelle eingesetzt, die aus einem Anodenraum mit einer Anode und einen Kathodenraum mit einer Kathode besteht. Anoden- und Kathodenraum werden von einer Ionenaustauschermembran getrennt. Hier können handelsübliche Ionenaustauschermembranen wie z.B. Nafion® 982 der Fa. DUPONT eingesetzt werden. In den Anodenraum, bestehend aus Titan oder einem edelmetallbeschichteten Titan mit einer edelmetalloxidbeschichteten Titan-Anode wird eine Natriumchlorid-haltige Lösung mit einer Natriumchlorid-Konzentration von üblicherweise ca. 300 g/l eingeführt. An der Anode wird das Chlorid-Ion zu Chlor oxidiert, das mit der abgereicherten Natriumchlorid-haltigen Lösung (ca. 200 g/l) aus der Zelle herausgeführt wird. Die Natrium-Ionen wandern unter Einfluss des elektrischen Feldes durch die Ionenaustauschermembran in den Kathodenraum. Bei dieser Wanderung nimmt jedes mol Natrium je nach Membran zwischen 3,5 und 4,5 mol Wasser mit. Dies führt dazu, dass der Anolyt an Wasser verarmt. Im Gegensatz zum Anolyten wird auf der Kathodenseite durch die Elektrolyse von Wasser zu Hydroxid-Ionen Wasser verbraucht. Das mit den Natrium-Ionen in den Katholyten gelangende Wasser reicht aus, um die Natronlauge-Konzentration im Auslauf auf 31-32 Gew. % zu halten, dies gilt bei einer NaOH Einlaufkonzentration von 30 % und einer Stromdichte von 4 kA/m². Im Kathodenraum wird Wasser elektrochemisch reduziert, wobei Hydroxid-Ionen und Wasserstoff entstehen.

Als Kathode wird eine Gasdiffusionselektrode eingesetzt, an der Sauerstoff mit Elektronen zu Hydroxid-Ionen umgesetzt werden, wobei kein Wasserstoff entsteht.

Mit den über die Ionenaustauschermembran in den Kathodenraum gelangten Natrium-Ionen bilden die Hydroxid-Ionen Natronlauge. In die Kathodenkammer wird üblicherweise eine Natronlauge mit einer Konzentration von 30 Gew. % zugeführt und eine Natronlauge mit einer Konzentration von 31-32 Gew. % abgeführt.

Um maximale Mengen an Natriumchlorid-haltigen Lösungen wirtschaftlich der Natriumchlorid-Elektrolyse zuzuführen, ist es notwendig, dass der Wassertransport über die Membran erhöht wird. Dieser kann durch Auswahl geeigneter Membranen erfolgen, wie z.B. in der US 4 025 405 beschrieben. Der Effekt eines erhöhten Wassertransportes ist, dass auf die sonst übliche Wasserzugabe zur Aufrechterhaltung der Laugekonzentration verzichtet werden kann. Gemäß der US 4 025 405 sind die Betriebsbedingungen der Elektrolyse sehr weit gefasst, so wird ein pH-Bereich von 1 bis 5, eine Temperatur von 35-100°C und eine Natriumchlorid-Konzentration von 100-325 g/l angegeben.

Gemäß der US 3 773 634 kann bei hoher Stromausbeute und hohem Wassertransport durch die Membran die Elektrolyse dann betrieben werden, wenn eine Laugekonzentration von 31-43 Gew. %, besonders bevorzugt 36-38Gew. % und eine Natriumchlorid-Konzentration von 120-250 g/l eingesetzt wird.

Eine weitere Alternative ist der Einsatz eine modifizierten Zelldesigns gemäß der EP 1 609 887. Hierbei wird die Elektrolysezelle so modifiziert, dass der Abstand zwischen Membran und Anode, der üblicherweise Null beträgt, d.h. die Membran liegt auf der Anode auf, vergrößert wird. Dies hat den Nachteil, dass die Nutzung nur mit dem Einsatz einer neue Elektrolysezelle mit angepasstem Design oder dem Umbau von bestehenden Elektrolysezellen auf das neue Design erfolgen kann, dass mit hohen Investitionen verbunden ist. Mit bestehenden Anlagen ist dieses Verfahrenskonzept wirtschaftlich nicht umsetzbar.

Bei der Durchführung des erfindungsgemäßen Verfahrens wird ein sehr reines Chlorgas erhalten, das bei chemischen Synthese wie beispielsweise der Herstellung von Isocyanaten problemlos eingesetzt werden kann.

Bevorzugt wird weiterhin ein Verfahren das dadurch gekennzeichnet ist, dass der als Ausgangsstoff für die erste Oxidation a) eingesetzte Chlorwasserstoff Produkt eines Herstellungsverfahrens von Isocyanaten ist und dass das gereinigte von Sauerstoff und ggf. von Nebenbestandteilen befreite Chlorgas des Schrittes g) bei der Herstellung von Isocyanaten eingesetzt, insbesondere als Teil eines Stoffkreislaufes wiedereingesetzt wird.

In einem ersten Schritt eines bevorzugten Verfahrens, das die Integration des neuen kombinierten Chlor-Herstellverfahrens in eine Isocyanat-Herstellung zum Gegenstand hat, erfolgt die Herstellung von Phosgen durch Umsetzung von Chlor mit Kohlenmonoxid. Die Synthese von Phosgen ist hinlänglich bekannt und ist z.B. in Ullmanns Enzyklopädie der industriellen Chemie, 3. Auflage, Band 13, Seite 494-500 dargestellt. Im technischen Maßstab wird Phosgen überwiegend durch Umsetzung von Kohlenmonoxid mit Chlor bevorzugt an Aktivkohle als Katalysator hergestellt. Die stark exotherme Gasphasenreaktion erfolgt typischerweise bei einer Temperatur von mindestens 250°C bis maximal 600°C in der Regel in Rohrbündelreaktoren. Die Abführung der Reaktionswärme kann auf unterschiedliche Weise erfolgen, beispielsweise durch ein flüssiges Wärmetauschmittel, wie z.B. in der Schrift WO 03/072237 A1 beschrieben, oder durch Siedekühlung über einen Sekundärkühlkreislauf unter gleichzeitiger Nutzung der Reaktionswärme zur Dampferzeugung, wie z.B. in der US-A 4764308 offenbart.

Aus dem im ersten Schritt gebildeten Phosgen wird durch Umsetzung mit wenigstens einem organischen Amin oder einem Gemisch aus zwei oder mehreren Aminen in einem nächsten Verfahrensschritt wenigstens ein Isocyanat gebildet. Dieser zweite Verfahrensschritt wird nachfolgend auch als Phosgenierung bezeichnet. Die Umsetzung erfolgt unter Bildung von Chlorwasserstoff als Nebenprodukt, das als Gemisch mit dem Isocyanat anfällt.

Die Synthese von Isocyanaten ist ebenfalls aus dem Stand der Technik grundsätzlich bekannt, wobei in der Regel Phosgen in einem stöchiometrischen Überschuss, bezogen auf das Amin, eingesetzt wird. Üblicherweise findet die Phosgenierung gemäß in der Flüssigphase statt, wobei das Phosgen und das Amin in einem Lösemittel gelöst sein können. Bevorzugte für die Phosgenierung Lösemittel sind chlorierte aromatische Kohlenwasserstoffe, wie Chlorbenzol, o-Dichlorbenzol, p-Dichlorbenzol, Trichlorbenzole, die entsprechenden Chlortoluole oder Chlorxylole, Chlorethylbenzol, Monochlordiphenyl, α- bzw. β-Naphthylchlorid, Benzoesäureethylester, Phthalsäuredialkylester, Diisodiethylphthalat, Toluol und Xylole. Weitere Beispiele für geeignete Lösemittel sind aus dem Stand der Technik grundsätzlich bekannt. Wie außerdem aus dem Stand der Technik, z.B. nach der Schrift WO 96/16028, bekannt, kann als Lösemittel für Phosgen ebenso das gebildete Isocyanat selbst fungieren. In einer anderen, bevorzugten Ausführungsform findet die Phosgenierung, insbesondere geeigneter aromatischer und aliphatischer Diamine, in der Gasphase, d.h. oberhalb des Siedepunktes des Amins, statt. Die Gasphasenphosgenierung ist z.B. in der EP 570 799 A1 beschrieben. Vorteile dieses Verfahrens gegenüber der ansonsten üblichen Flüssigphasenphosgenierung liegen in der Energieeinsparung, bedingt durch die Minimierung eines aufwändigen Lösemittel- und Phosgenkreislaufs.

Als organische Amine eignen sich prinzipiell alle primären Amine mit einer oder mehreren primären Aminogruppen, die mit Phosgen unter Bildung einer oder mehrerer Isocyanate mit einer oder mehreren Isocyanatgruppen reagieren können. Die Amine weisen mindestens eine, bevorzugt zwei, oder gegebenenfalls drei und mehr primäre Aminogruppen auf. So kommen als organische primäre Amine aliphatische, cycloaliphatische, aliphatisch-aromatische, aromatische Amine, Di- und/oder Polyamine in Frage, wie Anilin, Halogen-substituierte Phenylamine, z.B. 4-Chlorphenylamin, 1,6-Diaminohexan, 1-Amino-3,3,5-trimethyl-5-amino-cyclohexan, 2,4-, 2,6-Diaminotoluol oder deren Gemische, 4,4'-, 2,4'- oder 2,2'-Diphenylmethandiamin oder deren Gemische, wie auch höhermolekulare isomere, oligomere oder polymere Derivate der genannten Amine und Polyamine. Weitere mögliche Amine sind aus dem Stand der Technik grundsätzlich bekannt. Bevorzugte Amine für die vorliegende Erfindung sind die Amine der Diphenylmethandiamin-Reihe (monomere, oligomere und polymere Amine), 2,4-, 2,6-Diaminotoluol, Isophorondiamin und Hexamethylendiamin. Bei der Phosgenierung erhält man die entsprechenden Isocyanate Diisocyanatodiphenylmethan (MDI, monomere, oligomere und polymere Derivate), Toluylendiisocyanat (TDI), Hexamethylendiisocyanat (HDI) und Isophorondiisocyanat (IPDI).

Die Amine können mit Phosgen in einer einstufigen oder zweistufigen oder ggf. mehrstufigen Reaktion umgesetzt werden. Dabei ist eine kontinuierliche wie auch diskontinuierliche Betriebsweise möglich.

Wird eine einstufige Phosgenierung in der Gasphase gewählt, so erfolgt die Umsetzung oberhalb der Siedetemperatur des Amins bevorzugt innerhalb einer mittleren Kontaktzeit von 0,5 bis 5 s und bei einer Temperatur von 200 bis 600°C.

Die Phosgenierung in der Flüssigphase wird üblicherweise bei einer Temperatur von 20 bis 240°C und einem Druck von 1 bis ca. 50 bar durchgeführt. Die Phosgenierung in der Flüssigphase kann einstufig oder mehrstufig durchgeführt werden, wobei Phosgen im stöchiometrischen Überschuss eingesetzt werden kann. Dabei werden die Aminlösung und die Phosgenlösung über ein statisches Mischelement vereinigt und anschließend beispielsweise von unten nach oben durch einen oder mehrere Reaktionstürme geführt, wo das Gemisch zum gewünschten Isocyanat ausreagiert. Neben Reaktionstürmen, die mit geeigneten Mischelementen versehen sind, können auch Reaktionsbehälter mit Rührvorrichtung eingesetzt werden. Außer statischen Mischelementen können auch spezielle dynamische Mischelemente Anwendung finden. Geeignete statische und dynamische Mischelemente sind aus dem Stand der Technik grundsätzlich bekannt.

In der Regel wird die kontinuierliche Flüssigphasen-Isocyanatherstellung im industriellen Maßstab zweistufig durchgeführt. Dabei wird in der ersten Stufe im Allgemeinen bei einer Temperatur von maximal 220°C, bevorzugt maximal 160°C aus Amin und Phosgen das Carbamoylchlorid sowie aus Amin und abgespaltenem Chlorwasserstoff Aminhydrochlorid gebildet. Diese erste Stufe ist stark exotherm. In der zweiten Stufe wird sowohl das Carbamoylchlorid zu Isocyanat und Chlorwasserstoff gespalten als auch das Aminhydrochlorid zum Carbamoylchlorid umgesetzt. Die zweite Stufe wird in der Regel bei einer Temperatur von mindestens 90°C, vorzugsweise von 100 bis 240°C, durchgeführt.

Nach der Phosgenierung erfolgt in einem dritten Schritt die Abtrennung der bei der Phosgenierung gebildeten Isocyanate. Dies geschieht dadurch, dass zunächst das Reaktionsgemisch der Phosgenierung in einen flüssigen und einen gasförmigen Produktstrom in einer dem Fachmann grundsätzlich bekannten Weise aufgetrennt wird. Der flüssige Produktstrom enthält im Wesentlichen das Isocyanat bzw. Isocyanatgemisch, das Lösemittel sowie einen geringen Teil an nicht umgesetztem Phosgen. Der gasförmige Produktstrom besteht im Wesentlichen aus Chlorwasserstoffgas, stöchiometrisch überschüssigem Phosgen, sowie geringfügigen Mengen an Lösemittel und Inertgasen, wie zum Beispiel Stickstoff und Kohlenmonoxid. Ferner wird der Flüssigstrom anschließend einer Aufarbeitung zugeführt, vorzugsweise einer destillativen Aufarbeitung, wobei nacheinander Phosgen sowie das Lösemittel für die Phosgenierung abgetrennt werden. Gegebenenfalls erfolgt außerdem eine weitere Aufarbeitung der gebildeten Isocyanate. Dies geschieht beispielsweise, indem das erhaltene Isocyanatprodukt in einer dem Fachmann bekannten Weise fraktioniert wird.

Der bei der Reaktion von Phosgen mit einem organischen Amin erhaltene Chlorwasserstoff enthält im Allgemeinen organische Nebenbestandteile, welche sowohl bei der thermischen katalysierten oder nicht-thermischen aktivierten HCl-Oxidation als auch bei der elektrochemischen Oxidation einer wässrigen Chlorwasserstofflösung gemäß Schritt (c) stören können. Zu diesen organischen Bestandteilen zählen beispielsweise die bei der Isocyanatherstellung eingesetzten Lösungsmittel wie Chlorbenzol, o-Dichlorbenzol oder p-Dichlorbenzol. Wird bei der Elektrolyse eine Gasdiffusionselektrode als Kathode eingesetzt, so kann auch der Katalysator der Gasdiffusionselektrode durch die organischen Verunreinigungen deaktiviert werden. Darüber hinaus können sich diese Verunreinigungen auf dem Stromkollektor ablagern und dadurch den Kontakt zwischen Gasdiffusionselektrode und Stromkollektor verschlechtern, was einen unerwünschten Spannungsanstieg zur Folge hat. Wird zur Elektrolyse der Salzsäure das Diaphragmaverfahren eingesetzt, so können sich die genannten organischen Bestandteile auf den Graphitelektroden und/oder dem Diaphragma ablagern und dadurch ebenfalls die Elektrolysespannung erhöhen.

Dementsprechend erfolgt bevorzugt in einem weiteren Verfahrensschritt die Abtrennung des bei der Phosgenierung erzeugten Chlorwasserstoffs aus dem gasförmigen Produktstrom. Der gasförmige Produktstrom der bei der Abtrennung des Isocyanats erhalten wird, wird so behandelt, dass das Phosgen wieder der Phosgenierung und der Chlorwasserstoff einer elektrochemischen Oxidation zugeführt werden kann.

Die Abtrennung des Chlorwasserstoffs erfolgt bevorzugt zunächst, indem Phosgen aus dem gasförmigen Produktstrom abgetrennt wird. Die Abtrennung des Phosgens gelingt durch Verflüssigung von Phosgen, beispielsweise an einem oder mehreren in Reihe geschalteten Kondensatoren. Die Verflüssigung erfolgt vorzugsweise bei einer Temperatur im Bereich von -15 bis -40°C in Abhängigkeit des eingesetzten Lösemittels. Durch diese Tiefkühlung können außerdem Teile der Lösemittelreste aus dem gasförmigen Produktstrom entfernt werden.

Zusätzlich oder alternativ kann das Phosgen mit einem kalten Lösemittel oder Lösemittel-Phosgen-Gemisch aus dem Gasstrom in einer oder mehreren Stufen ausgewaschen werden. Als Lösemittel hierfür eignen sich beispielsweise die bereits in der Phosgenierung eingesetzten Lösemittel Chlorbenzol und o-Dichlorbenzol. Die Temperatur des Lösemittels oder des Lösemittel-Phosgen-Gemischs hierfür liegt im Bereich von -15 bis -46°C.

Das aus dem gasförmigen Produktstrom abgetrennte Phosgen kann wieder der Phosgenierung zugeführt werden. Der nach Abtrennung des Phosgens und eines Teils des Lösungsmittelrestes erhaltene Chlorwasserstoff kann neben den Inertgasen wie Stickstoff und Kohlenmonoxid noch 0,1 bis 1 Gew. % Lösungsmittel und 0,1 bis 2 Gew. % Phosgen enthalten.

Gegebenenfalls erfolgt anschließend eine Reinigung des Chlorwasserstoffs, um den Anteil an Spuren von Lösungsmittel zu verringern. Dies kann beispielsweise mittels Ausfrieren erfolgen, indem in Abhängigkeit von den physikalischen Eigenschaften des Lösemittels der Chlorwasserstoff zum Beispiel durch eine oder mehrere Kühlfallen geleitet wird.

In einer besonders bevorzugten Ausführungsform der gegebenenfalls vorgesehenen Reinigung des Chlorwasserstoffs werden zwei in Serie geschaltete Wärmetauscher von dem Chlorwasserstoffstrom durchströmt, wobei das abzutrennende Lösemittel in Abhängigkeit des Festpunktes zum Beispiel bei -40°C ausgefroren wird. Die Wärmetauscher werden bevorzugt wechselweise betrieben, wobei im jeweils zuerst durchströmten Wärmetauscher der Gasstrom das zuvor ausgefrorene Lösemittel auftaut. Das Lösemittel kann wieder für die Herstellung einer Phosgenlösung eingesetzt werden. Im nachgeschalteten zweiten Wärmetauscher, der mit einem üblichen Wärmeträgermedium für Kältemaschinen, z.B. eine Verbindung aus der Reihe der Frigene, beaufschlagt ist, wird das Gas bevorzugt unter den Festpunkt des Lösemittels abgekühlt, sodass dieses auskristallisiert. Nach abgeschlossenem Auftau- und Kristallisationsvorgang werden der Gasstrom und der Kühlmittelstrom umgeschaltet, sodass sich die Funktion der Wärmetauscher umkehrt. Der chlorwasserstoffhaltige Gasstrom kann auf diese Weise auf vorzugsweise maximal 500 ppm, besonders bevorzugt maximal 50 ppm, ganz besonders bevorzugt auf maximal 20 ppm Lösemittelgehalt abgereichert werden.

Alternativ kann die Reinigung des Chlorwasserstoffs bevorzugt in zwei in Serie geschalteten Wärmetauschern z.B. gemäß US-A-6 719 957 erfolgen. Bevorzugt wird dabei der Chlorwasserstoff auf einen Druck von 5 bis 20 bar, bevorzugt 10 bis 15 bar, verdichtet und der komprimierte gasförmige Chlorwasserstoff mit einer Temperatur von 20 bis 60°C, bevorzugt 30 bis 50°C, einem ersten Wärmeaustauscher zugeführt. In diesem wird der Chlorwasserstoff mit einem kalten Chlorwasserstoff einer Temperatur von -10 bis -30°C, der aus einem zweiten Wärmetauscher stammt, gekühlt. Dabei kondensieren organische Bestandteile, die einer Entsorgung oder Wiederverwertung zugeführt werden können. Der in den ersten Wärmetauscher geleitete Chlorwasserstoff verlässt diesen mit einer Temperatur von -20 bis 0°C und wird in dem zweiten Wärmetauscher auf eine Temperatur von -10 bis -30°C gekühlt. Das im zweiten Wärmetauscher anfallende Kondensat besteht aus weiteren organischen Bestandteilen sowie geringen Mengen Chlorwasserstoff. Zur Vermeidung eines Chlorwasserstoffverlustes wird das aus dem zweiten Wärmetauscher ablaufende Kondensat einer Abtrenn- und Verdampfereinheit zugeführt. Dies kann beispielsweise eine Destillationskolonne sein, in der aus dem Kondensat der Chlorwasserstoff ausgetrieben und in den zweiten Wärmetauscher zurückgeführt wird. Es ist auch möglich, den ausgetriebenen Chlorwasserstoff in den ersten Wärmetauscher zurückzuführen. Der in dem zweiten Wärmetauscher abgekühlte und von organischen Bestandteilen befreite Chlorwasserstoff wird bei einer Temperatur von -10 bis -30°C in den ersten Wärmetauscher geleitet. Nach Erwärmung auf 10 bis 30°C verlässt der von organischen Bestandteilen befreite Chlorwasserstoff den ersten Wärmetauscher.

In einem ebenso bevorzugten, alternativen Verfahren erfolgt die gegebenenfalls vorgesehene Reinigung des Chlorwasserstoffs von organischen Verunreinigungen, wie Lösemittelreste, an Aktivkohle mittels Adsorption. Dabei wird beispielsweise der Chlorwasserstoff nach Entfernung von überschüssigem Phosgen bei einer Druckdifferenz von 0 bis 5 bar, vorzugsweise von 0,2 und 2 bar, über oder durch eine Aktivkohleschüttung geleitet. Die Strömungsgeschwindigkeit und Verweilzeit wird dabei in einer dem Fachmann bekannten Weise dem Gehalt an Verunreinigungen angepasst. Die Adsorption von organischen Verunreinigungen ist ebenso an anderen geeigneten Adsorptionsmitteln möglich, z.B. an Zeolithen.

In einem weiteren auch bevorzugten, alternativen Verfahren kann für die gegebenenfalls vorgesehene Reinigung des Chlorwasserstoffs aus der Phosgenierung, eine Destillation des Chlorwasserstoffes vorgesehen sein. Diese erfolgt nach Kondensation des gasförmigen Chlorwasserstoffes aus der Phosgenierung. Bei der Destillation des kondensierten Chlorwasserstoffes wird der gereinigte Chlorwasserstoff als Kopfprodukt der Destillation entnommen, wobei die Destillation unter dem Fachmann bekannte, für eine solche Destillation übliche Bedingungen von Druck, Temperatur u.ä. erfolgt.

Der nach den oben dargestellten Verfahren abgetrennte und ggf. gereinigte Chlorwasserstoff kann danach der HCl-Oxidation mit Sauerstoff zugeführt werden. Diese HCl-Oxidation erfolgt wie beschrieben vorzugsweise nach dem Deacon-Verfahren.

Bevorzugt wird wie oben bereits beschrieben das als Deacon-Prozess bekannte katalytische Verfahren eingesetzt. Hierbei wird Chlorwasserstoff mit Sauerstoff in einer exothermen Gleichgewichtsreaktion zu Chlor oxidiert, wobei Wasserdampf anfällt. Die Reaktionstemperatur beträgt üblicherweise 150 bis 500°C, der übliche Reaktionsdruck beträgt 1 bis 25 bar. Da es sich um eine Gleichgewichtsreaktion handelt, ist es zweckmäßig, bei möglichst niedrigen Temperaturen zu arbeiten, bei denen der Katalysator noch eine ausreichende Aktivität aufweist. Da keine Selektivitätsverluste zu befürchten sind, kann es wirtschaftlich vorteilhaft sein, bei relativ hohem Druck und dementsprechend bei gegenüber Normaldruck längerer Verweilzeit zu arbeiten.

Geeignete bevorzugte Katalysatoren für das Deacon-Verfahren enthalten Rutheniumoxid, Rutheniumchlorid oder andere Rutheniumverbindungen auf Siliziumdioxid, Aluminiumoxid, Titandioxid oder Zirkondioxid als Träger. Geeignete Katalysatoren können beispielsweise durch Aufbringen von Rutheniumchlorid auf den Träger und anschließendes Trocknen oder Trocknen und Calcinieren erhalten werden. Geeignete Katalysatoren können ergänzend zu oder an Stelle einer Rutheniumverbindung auch Verbindungen anderer Edelmetalle, beispielsweise Gold, Palladium, Platin, Osmium, Iridium, Silber, Kupfer oder Rhenium enthalten. Geeignete Katalysatoren können ferner Chrom(III)oxid enthalten.

Die katalytische Chlorwasserstoff- Oxidation kann adiabatisch oder bevorzugt isotherm oder annähernd isotherm, diskontinuierlich, bevorzugt aber kontinuierlich als Fließ- oder Festbettverfahren, bevorzugt als Festbettverfahren, besonders bevorzugt in Rohrbündelreaktoren an Heterogenkatalysatoren bei einer Reaktortemperatur von 180 bis 500°C, bevorzugt 200 bis 400°C, besonders bevorzugt 220 bis 350°C und einem Druck von 1 bis 25 bar (1000 bis 25000 hPa), bevorzugt 1,2 bis 20 bar, besonders bevorzugt 1,5 bis 17 bar und insbesondere 2,0 bis 15 bar durchgeführt werden.

Übliche Reaktionsapparate, in denen die katalytische Chlorwasserstoff-Oxidation durchgeführt wird, sind Festbett- oder Wirbelbettreaktoren. Die katalytische Chlorwasserstoff-Oxidation kann bevorzugt auch mehrstufig durchgeführt werden.

Bei der isothermen oder annähernd isothermen Fahrweise können auch mehrere, also 2 bis 10, bevorzugt 2 bis 6, besonders bevorzugt 2 bis 5, insbesondere 2 bis 3, in Reihe geschaltete Reaktoren mit zusätzlicher Zwischenkühlung eingesetzt werden. Der Sauerstoff kann entweder vollständig zusammen mit dem Chlorwasserstoff vor dem ersten Reaktor oder über die verschiedenen Reaktoren verteilt zugegeben werden. Diese Reihenschaltung einzelner Reaktoren kann auch in einem Apparat zusammengeführt werden.

Eine weitere bevorzugte Ausführungsform einer für das Verfahren geeigneten Vorrichtung besteht darin, dass man eine strukturierte Katalysatorschüttung einsetzt, bei der die Katalysatoraktivität in Strömungsrichtung ansteigt. Eine solche Strukturierung der Katalysatorschüttung kann durch unterschiedliche Tränkung der Katalysatorträger mit Aktivmasse oder durch unterschiedliche Verdünnung des Katalysators mit einem Inertmaterial erfolgen. Als Inertmaterial können beispielsweise Ringe, Zylinder oder Kugeln aus Titandioxid, Zirkondioxid oder deren Gemischen, Aluminiumoxid, Steatit, Keramik, Glas, Graphit oder Edelstahl eingesetzt werden. Beim bevorzugten Einsatz von Katalysatorformkörpern sollte das Inertmaterial bevorzugt ähnliche äußeren Abmessungen haben.

Als Katalysatorformkörper eignen sich Formkörper mit beliebigen Formen, bevorzugt sind Tabletten, Ringe, Zylinder, Sterne, Wagenräder oder Kugeln, besonders bevorzugt sind Ringe, Zylinder oder Sternstränge als Form.

Als Heterogenkatalysatoren eignen sich insbesondere Rutheniumverbindungen oder Kupferverbindungen auf Trägermaterialen, die auch dotiert sein können, bevorzugt sind gegebenenfalls dotierte Rutheniumkatalysatoren. Als Trägermaterialen eignen sich beispielsweise Siliziumdioxid, Graphit, Titandioxid mit Rutil- oder Anatas-Struktur, Zirkondioxid, Aluminiumoxid oder deren Gemische, bevorzugt Titandioxid, Zirkondioxid, Aluminiumoxid oder deren Gemische, besonders bevorzugt γ- oder δ-Aluminiumoxid oder deren Gemische.

Die Kupfer- bzw. die Rutheniumträgerkatalysatoren können beispielsweise durch Tränkung des Trägermaterials mit wässrigen Lösungen von CuCl₂ bzw. RuCl₃ und gegebenenfalls eines Promotors zur Dotierung, bevorzugt in Form ihrer Chloride, erhalten werden. Die Formgebung des Katalysators kann nach oder bevorzugt vor der Tränkung des Trägermaterials erfolgen.

Zur Dotierung der Katalysatoren eignen sich als Promotoren Alkalimetalle wie Lithium, Natrium, Kalium, Rubidium und Cäsium, bevorzugt Lithium, Natrium und Kalium, besonders bevorzugt Kalium, Erdalkalimetalle wie Magnesium, Calcium, Strontium und Barium, bevorzugt Magnesium und Calcium, besonders bevorzugt Magnesium, Seltenerdmetalle wie Scandium, Yttrium, Lanthan, Cer, Praseodym und Neodym, bevorzugt Scandium, Yttrium, Lanthan und Cer, besonders bevorzugt Lanthan und Cer, oder deren Gemische.

Die Formkörper können anschließend bei einer Temperatur von 100 bis 400°C, bevorzugt 100 bis 300°C beispielsweise unter einer Stickstoff-, Argon- oder Luftatmosphäre getrocknet und gegebenenfalls calciniert werden. Bevorzugt werden die Formkörper zunächst bei 100 bis 150°C getrocknet und anschließend bei 200 bis 400°C calciniert.

Der Umsatz an Chlorwasserstoff im einfachen Durchgang kann bevorzugt auf 15 bis 90 %, bevorzugt 40 bis 85 %, besonders bevorzugt 50 bis 70 % begrenzt werden. Nicht umgesetzter Chlorwasserstoff kann nach Abtrennung teilweise oder vollständig in die katalytische Chlorwasserstoff-Oxidation zurückgeführt werden.

Die Reaktionswärme der katalytischen Chlorwasserstoff-Oxidation kann in vorteilhafter Weise zur Erzeugung von Hochdruck-Wasserdampf genutzt werden. Dieser kann zum Betrieb eines Phosgenierungsreaktors und oder von Destillationskolonnen, insbesondere von Isocyanat-Destillationskolonnen genutzt werden.

In einem nächsten Schritt wird das gebildete Chlor abgetrennt. Der Abtrennschritt umfasst üblicherweise mehrere Stufen, nämlich die Abtrennung und gegebenenfalls Rückführung von nicht umgesetztem Chlorwasserstoff aus dem Produktgasstrom der katalytischen Chlorwasserstoff-Oxidation, die Trocknung des erhaltenen, im wesentlichen Chlor und Sauerstoff enthaltenden Stroms sowie die Abtrennung von Chlor aus dem getrockneten Strom.

Die Abtrennung von nicht umgesetztem Chlorwasserstoff und von gebildetem Wasserdampf kann durch Auskondensieren von wässriger Salzsäure aus dem Produktgasstrom der Chlorwasserstoffoxidation durch Abkühlung erfolgen. Chlorwasserstoff kann auch in verdünnter Salzsäure oder Wasser absorbiert werden.

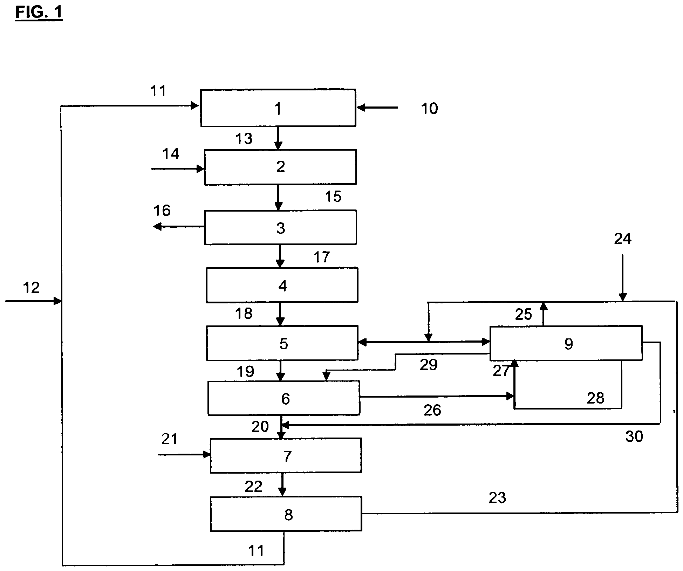

Das erfindungsgemäße Verfahren wird nachstehend anhand der Fig. 1 beispielhaft näher erläutert.

Fig. 1 zeigt eine bevorzugte Ausfuhrungsform des neuen Verfahrens hier in Kombination mit der Herstellung von Isocyanaten.

### Beispiele

In Fig. 1 ist ein Beispiel für den Einsatz des Verfahrens als Ergänzung und Teil einer Isocyanatproduktion dargestellt.

In einer ersten Stufe 1 der Isocyanatherstellung wird Chlor 11 mit Kohlenmonoxid 10 zu Phosgen 13 umgesetzt. In der folgenden Stufe 2 wird Phosgen 13 aus Stufe 1 mit einem Amin 14 (z.B. Toluoldiamin) zu einem Gemisch 15 aus Isocyanat (z.B. Toluoldiisocyanat, TDI) und Chlorwasserstoff umgesetzt, das Isocyanat 16 wird abgetrennt (in Stufe 3) und verwertet und das HCl-Gas 17 einer Reinigung 4 unterzogen. Das gereinigte HCl-Gas 18 wird in dem HCl-Oxidationsverfahren 5 mit Sauerstoff umgesetzt, hier in einem Deacon-Prozess mittels Katalysator.

Das Reaktionsgemisch 19 aus Stufe 5 wird abgekühlt (Schritt 6). Wässrige Salzsäure 26, die dabei, gegebenenfalls mit Wasser oder verdünnter Salzsäure vermischt anfällt, wird ausgeschleust.

Das so erhaltene Gasgemisch 20 bestehend wenigstens aus Chlor, Sauerstoff und Nebenbestandteilen wie Stickstoff, Kohlendioxid etc. und wird mit konz. Schwefelsäure 21 (96 %ig) getrocknet (Schritt 7).

In einer Reinigungsstufe 8 wird Chlor 11 vom Gasgemisch 22 aus Stufe 7 getrennt. Der Sauerstoff und Nebenbestandteile aufweisende Reststrom 23 wird Elektrolysestufe 9 zugeführt. Die Elektrolysestufe ist eine ODC-Elektrolyse in der auf der Kathodenseite Sauerstoff als Reaktand eingesetzt wird.

Das aus der Reinigungsstufe 8 erhaltene Chlorgas kann direkt in der Phosgensynthese 1 wieder eingesetzt werden. Der bei diesem Schritt anfallende sauerstoffhaltige Strom 23 wird im Schritt 5 (HCl-Oxidation) und Schritt 9 (Elektrolysezelle) eingesetzt.

Die Konzentration der der Elektrolysezelle 9 zugeführten Salzsäure 27 beträgt 14 bis 15 Gew.-% HCl, die der aus der Elektrolyse 9 ablaufenden Salzsäure 28 beträgt 11 bis 13 Gew.- % HCl. Der Salzsäure-Strom 28 wird mit konzentrierter Salzsäure 26 aus der Trennungsstufe 6 versetzt und erneut der Zelle 9 zugeführt.

Der bei Schritt 5 und Schritt 9 verbrauchte Sauerstoff wird durch Sauerstoff aus einer externen Quelle 24 ersetzt. Der im Kathodenraum der Elektrolysezelle nicht verbrauchte Sauerstoff 25 wird im Kreis geführt und mit frischem Sauerstoff aus einer externen Quelle 24 versetzt.

Der ebenfalls im Kathodenraum anfallende ca. 2 Gew. %-ige Salzsäurestrom 29 wird der Salzsäure-Abtrennung 6 zugeführt und dient dort als Absorptionsmittel für überschüssigen gasförmige Chlorwasserstoff.

Das gemäß Schritt 9 hergestellte Chlor 30 wird mit dem chlorhaltigen Gasstrom 20 vereinigt.

Der vereinigte Gasstrom 30, 20 wird in einer ein- oder mehrstufigen Kühlung mittels eines Kühlaggregats, z.B. eines Röhrenwärmetauscher, abgekühlt und getrocknet. Die Trocknung 7 kann zum Beispiel mit Hilfe eines geeigneten Trocknungsmittels in einer mit Stoffaustauschelementen bestückten Absorptionskolonne erfolgen. Ein geeignetes Trocknungsmittel kann, wie z.B. in DE 10 235 476 A beschrieben, neben Molsieben oder hygroskopischen Adsorbentien z.B. Schwefelsäure sein. Die Trocknung kann ein- oder mehrstufig erfolgen. Bevorzugt erfolgt die Trocknung zweistufig, indem das zu trocknende Chlor in einer ersten Stufe mit einer Schwefelsäure geringerer Konzentration, vorzugsweise 70 bis 80 %, besonders bevorzugt 75 bis 80 %, in Kontakt gebracht wird. In einer zweiten Stufe wird die Restfeuchte mittels einer höher konzentrierten Schwefelsäure von bevorzugt 88 bis 96 %, besonders bevorzugt 92-96 %, aus dem Chlor entfernt. Das auf diese Art getrocknete Chlor (22) mit einer Restfeuchte von bevorzugt maximal 100 ppm, besonders bevorzugt maximal 20 ppm kann durch einen Tröpfchenabscheider geleitet werden, um gegebenenfalls darin noch enthaltene Schwefelsäuretröpfchen zu entfernen.

Der getrocknete Chlorgasstrom 22 wird anschließend einer Chlorreinigung 8 unterzogen.

### Beispiel 1

Ein Strom von 35,9 t/h gereinigten Chlorwasserstoff aus einer Isocyanat-Anlage wird in zwei Teilströme aufgeteilt. 29,5 t/h werden einer HCl-Oxidation und 6,4 t/h einer HCl-Absorption zugeführt. 29,5 t/h HCl werden mit 12,9 t/h Sauerstoff (Gehalt größer 99 %) einer katalytischen HCl-Oxidation zugeführt. Die Oxidation erfolgt bei 333°C und 3,4 bar. Der HCl-Umsatz im Reaktor beträgt 85 %. Das den Reaktor verlassende Gasgemisch wird auf 100°C abgekühlt, die HCl mit dem Reaktionswasser in einer HCl-Absorption kondensiert. Hierzu wird in die Salzsäure 26 aus der HCl-Absorption ein Teilstrom des aus der Elektrolyse kommenden an Salzsäure abgereichterten Anolytsäure-Stromes 28 eingeleitet. Es werden 32,1 t/h der an Salzsäure abgereicherten Anolyt-Säure 28 mit einer HCl-Konz. von 12,2 Gew. % der HCl-Absorption zugeführt. Der abgekühlte Prozessgasstrom (4,4 t/h HCl, 7,4 t/h Sauerstoff, 24,4 t/h Chlor, 6,18 t/h Wasser) wird mit 6,4 t/h gereinigten Chlorwasserstoff in die HCl-Absorption geleitet. In dieser HCl-Absorption-Einheit wird eine 30 gew. %ige Salzsäure 26 hergestellt, die mit dem Rest der abgereicherten Anolytsäure 28 vereinigt und erneut der Elektrolysezelle zugeführt wird. 2,96 t/h der abgereicherten Anolytsäure 28 werden aus dem Anolytsäure-Kreislauf ausgeschleust, (nicht gezeichnet)

Die Elektrolyse wird mit einer Stromdichte von 5 kA/m² bei 55°C und einer Spannung von 1,39 V betrieben. Als Anoden- und Kathodenwerkstoff wird ein Palladium-stabilisiertes Titan eingesetzt. An der Rutheniumoxid-beschichteten Anode der Fa. DENORA, Deutschland, wird 10,1 t/h Chlor entwickelt. Anoden- und Kathoden-Halbschale werden durch eine Ionenaustauschermembran der Fa. DUPONT, Typ Nafion 324 getrennt. Als Kathode wird eine Sauerstoffverzehrkathode der Fa. ETEK eingesetzt, die einen Rhodiumsulfid-geträgerten Katalysator enthält. Sauerstoff wird dem Kathoden-Halbelement mit 100 % Überschuss zugeführt, d.h. mit 9,17 t/h. Der Sauerstoff wird in die Elektrolyse recycliert, ein Purge-Strom von 1 % der Feedmenge wird hinter der Elektrolyse 9 abgeführt (nicht gezeichnet) oder in der HCl-Oxidation 5 verwendet. Der Druck in der Anodenhalbzelle ist höher als der in der Kathodenhalbzelle. Der Differenzdruck beträgt 200 mbar. Der Kathodenhalbzelle wird ein Kondensatstrom von 8,8 t/h entnommen.

Die Elektrolyseeinheit 9 besteht aus 615 Elektrolyseelementen, wobei ein Element aus einer Anodenhalbschale mit Anode, einer Ionenaustauschermembran und einer Kathodenhalbschale mit Sauerstoffverzehrkathode besteht.

### Beispiel 2

Wie in Beispiel 1 wird ein gereinigter HCl-Gasstrom von 35,9 t/h der HCl-Oxidation mit 100 % Sauerstoffüberschuss, d.h. 15,7 t/h Sauerstoff, zugeführt. Der Umsatz beträgt 85 %, so dass den Reaktor 5,4 t/h HCl, 9,0 t/h Sauerstoff, 7,5 t/h Wasser und 29,7 t/h Chlor verlassen. Dieses Prozessgas 19 wird einer HCl-Absorption zugeführt, die mit einem ersten Teilstrom von 177,8 t/h aus einer NaCl-Elektrolyse stammenden an NaCl verarmten NaCl-haltigen Lösung (18,3 Gew. % NaCl) betrieben wird. In dieser NaCl-haltigen Lösung wird das Wasser und der Chlorwasserstoff des Prozessgases 19 absorbiert. Der die Absorption verlassende Strom setzt sich wie folgt zusammen: 152,8 t/h Wasser, 32,5 t/h NaCl, 5,4 t/h Chlorwasserstoff. Anschließend wird dieser Strom mit dem zweiten Teilstrom der NaCl-haltigen Lösung von 118,2 t/h vereinigt, mit 26,4 t/h fester NaCl versetzt und wieder der NaCl-Elektrolyse zugeführt. Die NaCl-Elektrolyse besteht aus 1475 bipolaren Elektrolyseelementen je 2,71m² Membranfläche. Die NaCl-Elektrolyse wird mit Anodenhalbschalen aus Titan, die eine Edelmetalloxid-beschichtete Titan-Anode trägt, betrieben. Die Kathodenhalbschale besteht aus Nickel und trägt eine Edelmetalloxid-beschichtete Nickel-Kathode. Anoden- und Kathodenhalbschale werden durch eine Ionenaustauschermembran der Fa. DUPONT Nafion 982 getrennt. Anodisch werden 21,2 t/h Chlor, kathodisch 74,8 t/h Natronlauge mit einer Konzentration von 32 Gew. % und 0,6 t/h Wasserstoff hergestellt. Der an NaCl abgereicherte Anolyt wird zum Teil wieder der HCl-Absorption zugeführt.

## Patentansprüche

1. Verfahren zur Herstellung von Chlor mittels mehrstufiger Oxidation durch
a) thermische Umsetzung von Chlorwasserstoff mit Sauerstoff unter Einsatz von Katalysatoren,
bei dem das bei der Umsetzung a) entstehende Gasgemisch, bestehend aus den Zielprodukten Chlor und Wasser, nicht umgesetztem Chlorwasserstoff und Sauerstoff, sowie weiteren Nebenbestandteilen, insbesondere Kohlendioxid und Stickstoff,
b) zur Kondensation von Salzsäure abgekühlt wird und
c) die entstandene wässrige Lösung von Chlorwasserstoff vom Gasgemisch abgetrennt wird, **dadurch gekennzeichnet, dass**
d) die abgetrennte Salzsäure mindestens teilweise einer elektrochemischen Oxidation zugeführt wird, in der wenigstens ein Teil der wässrigen Salzsäure zu Chlor oxidiert wird, wobei als Kathode eine Sauerstoff reduzierende Gasdiffusionselektrode verwendet wird, welcher Sauerstoff zugeführt wird,
e) das in Schritt d) anfallende Chlorgas dem in Schritt c) anfallenden Gasgemisch zugegeben wird,
f) die im Gasgemisch aus den Schritten c) und e) vorhandenen Reste an Wasser, insbesondere durch Wäsche mit Schwefelsäure, entfernt werden,
g) das entstehende chlorreiche Gasgemisch von Sauerstoff und ggf. von Nebenbestandteilen befreit wird.

2. Verfahren gemäß Anspruch 1, **dadurch gekennzeichnet, dass** die elektrochemische Oxidation der wässrigen Chlorwasserstoff-Lösung gemäß Schritt d) mittels Membranelektrolyse erfolgt.

3. Verfahren gemäß Anspruch 1, **dadurch gekennzeichnet, dass** die elektrochemische Oxidation der wässrigen Chlorwasserstoff-Lösung gemäß Schritt d) mittels Diaphragma-Elektrolyse erfolgt.

4. Verfahren gemäß Anspruch 3, **dadurch gekennzeichnet, dass** als Elektroden für die Anode und/oder die Kathode Elektroden auf Basis von Graphit verwendet werden.

5. Verfahren gemäß Anspruch 3 oder 4, **dadurch gekennzeichnet, dass** Kathoden auf Basis von Graphit verwendet werden, die eine Iridium enthaltende Beschichtung aufweisen.

6. Verfahren gemäß wenigstens einem der Ansprüche 1 bis 5, **dadurch gekennzeichnet, dass** Chlorwasserstoff als Salzsäure gemäß den Schritten b) und c) vollständig vom Gasgemisch abgetrennt wird.

7. Verfahren gemäß wenigstens einem der Ansprüche 1 bis 6, **dadurch gekennzeichnet, dass** die Abtrennung des Chlorwasserstoffs vom Gasgemisch gemäß Schritt b) und c) durch zusätzliche Wäsche des Gasgemisches mit Wasser oder verdünnter Salzsäure, insbesondere mit Wasser erfolgt.

8. Verfahren gemäß wenigstens einem der Ansprüche 1 bis 7, **dadurch gekennzeichnet, dass** die Gasdiffusionselektrode wenigstens auf einem elektrisch leitfähigen Gewebe, Geflecht, Gewirke, Netz oder Vlies aus Kohlenstoff basiert, welches zwischen einer kohlenstoffhaltigen Katalysatorschicht und einer Gasdiffusionsschicht angeordnet ist.

9. Verfahren gemäß Anspruch 8, **dadurch gekennzeichnet, dass** die Katalysatorschicht Rhodium und/oder ein Rhodiumsulfid enthält.

10. Verfahren gemäß mindestens einem der Ansprüche 1, 2 und 4 bis 9, **dadurch gekennzeichnet, dass** als Anode eine Titan enthaltende Elektrode verwendet wird, die eine Beschichtung aus wenigstens einem Edelmetalloxid, vorzugsweise aus Rutheniumoxid, aufweist.

11. Verfahren gemäß mindestens einem der Ansprüche 1, 2 und 4 bis 10, **dadurch gekennzeichnet, dass** die elektrochemische Oxidation gemäß Schritt d) in einer Elektrolysezelle enthaltend Titan und/oder eine Titanlegierung als Werkstoff eingesetzt wird.

12. Verfahren nach einem der Ansprüche 1 bis 11, **dadurch gekennzeichnet, dass** der als Ausgangsstoff für die erste Oxidation a) eingesetzte Chlorwasserstoff Produkt eines Herstellungsverfahrens von Isocyanaten ist und dass das gereinigte von Sauerstoff und ggf. von Nebenbestandteilen befreite Chlorgas des Schrittes g) bei der Herstellung von Isocyanaten eingesetzt, insbesondere als Teil eines Stoffkreislaufes wiedereingesetzt wird.

13. Verfahren nach mindestens einem der Ansprüche 1, 2 und 6 bis 12, **dadurch gekennzeichnet, dass** die Salzsäure in Schritt d) zusammen mit Alkalichloriden, insbesondere mit Natriumchlorid in einer anodischen Alkalichlorid-Elektrolyse oxidiert wird.

14. Verfahren nach Anspruch 13, **dadurch gekennzeichnet, dass** als Alkalichlorid eine aus der Alkalichlorid-Elektrolyse stammende abgereicherte Alkalichloridlösung verwendet wird.

15. Verfahren nach mindestens einem der Ansprüche 1, 2 und 6 bis 14, **dadurch gekennzeichnet, dass** ein Teil des für die erste HCl Oxidation a) vorgesehenen Chlorwasserstoffs abgezweigt wird, einer Absorption mit Wasser oder verdünnter Salzsäure, insbesondere verdünnter Salzsäure unterzogen wird und die entstehende, konzentrierte Salzsäure mit der Salzsäure aus Schritt c) vereinigt und der Elektrolyse gemäß Schritt d) zugeführt wird.

16. Verfahren nach mindestens einem der Ansprüche 1 bis 15, **dadurch gekennzeichnet, dass** die erste HCl Oxidation a) mit einem Umsatz von 50 bis 98 %, insbesondere mit einem Umsatz von 60 bis 95 % betrieben wird.

## Claims

1. Process for preparing chlorine by means of multistage oxidation by
a) thermal reaction of hydrogen chloride with oxygen using catalysts,
in which the gas mixture formed in the reaction a), consisting of the target products chlorine and water, unconverted hydrogen chloride and oxygen, and further secondary constituents, especially carbon dioxide and nitrogen,
b) is cooled down for condensation of hydrochloric acid and
c) the resultant aqueous solution of hydrogen chloride is separated from the gas mixture, **characterized in that**
d) the hydrochloric acid separated off is at least partly fed to an electrochemical oxidation in which at least a portion of the aqueous hydrochloric acid is oxidized to chlorine, using an oxygen-reducing gas diffusion electrode as cathode which is supplied with oxygen,
e) the chlorine gas obtained in step d) is added to the gas mixture obtained in step c),
f) the residues of water present in the gas mixture from step c) and e) are removed, especially by scrubbing with sulfuric acid,
g) the resultant chlorine-rich gas mixture is separated from oxygen and optionally from secondary constituents.

2. Process according to Claim 1, **characterized in that** the electrochemical oxidation of the aqueous hydrogen chloride solution in step d) is effected by means of membrane electrolysis.

3. Process according to Claim 1, **characterized in that** the electrochemical oxidation of the aqueous hydrogen chloride solution in step d) is effected by means of diaphragm electrolysis.

4. Process according to Claim 3, **characterized in that** the electrodes used for the anode and the cathode are electrodes based on graphite.

5. Process according to Claim 3 or 4, **characterized in that** cathodes based on graphite having an iridium-containing coating are used.

6. Process according to at least one of Claims 1 to 5, **characterized in that** hydrogen chloride is separated completely from the gas mixture as hydrochloric acid in steps b) and c).

7. Process according to at least one of Claims 1 to 6, **characterized in that** the hydrogen chloride is separated from the gas mixture in step b) and c) by additional scrubbing of the gas mixture with water or dilute hydrochloric acid, especially with water.

8. Process according to at least one of Claims 1 to 7, **characterized in that** the gas diffusion electrode is based at least on an electrically conductive weave, braid, knit, mesh or nonwoven made of carbon, disposed between a carbonaceous catalyst layer and a gas diffusion layer.

9. Process according to Claim 8, **characterized in that** the catalyst layer contains rhodium and/or a rhodium sulfide.

10. Process according to at least one of Claims 1, 2 and 4 to 9, **characterized in that** the anode used as a titanium-containing electrode having a coating of at least one precious metal oxide, preferably of ruthenium oxide.

11. Process according to at least one of Claims 1, 2 and 4 to 10, **characterized in that** the electrochemical oxidation in step d) is used in electrolysis cell comprising titanium and/or a titanium alloy as material.

12. Process according to any of Claims 1 to 11, **characterized in that** the hydrogen chloride used as starting material for the first oxidation a) is a product of a preparation process for isocyanates, and **in that** the purified chlorine gas from step g) that has been freed of oxygen and optionally of secondary constituents is used in the preparation of isocyanates, especially reused as part of a circulation of matter.

13. Process according to at least one of Claims 1, 2 and 6 to 12, **characterized in that** the hydrochloric acid is oxidized in step d) together with alkali metal chloride, especially with sodium chloride, in an anodic alkali metal chloride electrolysis.

14. Process according to Claim 13, **characterized in that** the alkali metal chloride used is a depleted alkali metal chloride solution that originates from alkali metal chloride electrolysis.

15. Process according to at least one of Claims 1, 2 and 6 to 14, **characterized in that** a portion of the hydrogen chloride intended for the first HCl oxidation a) is branched off and subjected to absorption with water or dilute hydrochloric acid, especially dilute hydrochloric acid, and the resultant concentrated hydrochloric acid is combined with the hydrochloric acid from step c) and sent to the electrolysis in step d).

16. Process according to at least one of Claims 1 to 15, **characterized in that** the first HCl oxidation a) is run with a conversion of 50% to 98%, especially with a conversion of 60% to 95%.

## Revendications

1. Procédé de fabrication de chlore par oxydation à plusieurs étapes, par
a) la réaction thermique de chlorure d'hydrogène avec de l'hydrogène en utilisant des catalyseurs,
selon lequel le mélange gazeux formé lors de la réaction a), constitué par les produits cibles chlore et eau, du chlorure d'hydrogène non réagi et de l'oxygène, ainsi que d'autres constituants secondaires, notamment du dioxyde de carbone et de l'azote,
b) est refroidi pour la condensation d'acide chlorhydrique, et
c) la solution aqueuse de chlorure d'hydrogène formée est séparée du mélange gazeux, **caractérisé en ce que**
d) l'acide chlorhydrique séparé est au moins partiellement introduit dans une oxydation électrochimique, lors de laquelle au moins une partie de l'acide chlorhydrique aqueux est oxydé en chlore, une électrode à diffusion de gaz réduisant l'oxygène étant utilisée en tant que cathode, qui est alimentée en oxygène,
e) le chlore gazeux formé à l'étape d) est ajouté au mélange gazeux formé à l'étape c),
f) les résidus d'eau présents dans le mélange gazeux des étapes c) et e) sont éliminés, notamment par lavage avec de l'acide sulfurique,
g) le mélange gazeux riche en chlore formé est débarrassé de l'oxygène et éventuellement de constituants secondaires.

2. Procédé selon la revendication 1, **caractérisé en ce que** l'oxydation électrochimique de la solution aqueuse de chlorure d'hydrogène selon l'étape d) a lieu au moyen d'une électrolyse à membrane.

3. Procédé selon la revendication 1, **caractérisé en ce que** l'oxydation électrochimique de la solution aqueuse de chlorure d'hydrogène selon l'étape d) a lieu au moyen d'une électrolyse à diaphragme.

4. Procédé selon la revendication 3, **caractérisé en ce que** des électrodes à base de graphite sont utilisées en tant qu'électrodes pour l'anode et/ou la cathode.

5. Procédé selon la revendication 3 ou 4, **caractérisé en ce que** des cathodes à base de graphite sont utilisées, qui comprennent un revêtement contenant de l'iridium.

6. Procédé selon au moins l'une quelconque des revendications 1 à 5, **caractérisé en ce que** le chlorure d'hydrogène est entièrement séparé du mélange gazeux sous la forme d'acide chlorhydrique selon les étapes b) et c).

7. Procédé selon au moins l'une quelconque des revendications 1 à 6, **caractérisé en ce que** la séparation du chlorure d'hydrogène du mélange gazeux selon les étapes b) et c) a lieu par lavage supplémentaire du mélange gazeux avec de l'eau ou de l'acide chlorhydrique dilué, notamment avec de l'eau.

8. Procédé selon au moins l'une quelconque des revendications 1 à 7, **caractérisé en ce que** l'électrode à diffusion de gaz est à base d'au moins un tissu, un maillage, un tricot, un treillis ou un non-tissé électriquement conducteur en carbone, qui est agencé entre une couche de catalyseur contenant du carbone et une couche de diffusion de gaz.

9. Procédé selon la revendication 8, **caractérisé en ce que** la couche de catalyseur contient du rhodium et/ou un sulfure de rhodium.

10. Procédé selon au moins l'une quelconque des revendications 1, 2 et 4 à 9, **caractérisé en ce qu'**une électrode contenant du titane est utilisée en tant qu'anode, qui comprend un revêtement en au moins un oxyde de métal noble, de préférence en oxyde de ruthénium.

11. Procédé selon au moins l'une quelconque des revendications 1, 2 et 4 à 10, **caractérisé en ce que** l'oxydation électrochimique selon l'étape d) est commencée dans une cellule d'électrolyse contenant du titane et/ou un alliage de titane en tant que matériau.

12. Procédé selon au moins l'une quelconque des revendications 1 à 11, **caractérisé en ce que** le chlorure d'hydrogène utilisé en tant que matière première pour la première oxydation a) est le produit d'un procédé de fabrication d'isocyanates, et **en ce que** le chlore gazeux purifié, débarrassé de l'oxygène et éventuellement de constituants secondaires, de l'étape g) est utilisé lors de la fabrication d'isocyanates, notamment réutilisé en tant que partie d'un circuit de matière.

13. Procédé selon au moins l'une quelconque des revendications 1, 2 et 6 à 12, **caractérisé en ce que** l'acide chlorhydrique est oxydé à l'étape d) conjointement avec des chlorures alcalins, notamment avec du chlorure de sodium, dans une électrolyse de chlorure alcalin anodique.

14. Procédé selon la revendication 13, **caractérisé en ce qu'**une solution de chlorure alcalin appauvrie issue de l'électrolyse de chlorure alcalin est utilisée en tant que chlorure alcalin.

15. Procédé selon au moins l'une quelconque des revendications 1, 2 et 6 à 14, **caractérisé en ce qu'**une partie du chlorure d'hydrogène prévu pour la première oxydation d'HCl a) est dérivée, soumise à une absorption avec de l'eau ou de l'acide chlorhydrique dilué, notamment de l'acide chlorhydrique dilué, et l'acide chlorhydrique concentré formé est réuni avec l'acide chlorhydrique de l'étape c) et introduit dans l'électrolyse selon l'étape d).

16. Procédé selon au moins l'une quelconque des revendications 1 à 15, **caractérisé en ce que** la première oxydation d'HCl a) est réalisée avec une conversion de 50 à 98 %, notamment avec une conversion de 60 à 95 %.
